# EUROPÄISCHE PATENTSCHRIFT

(11) **EP 1 784 756 B1**
(45) Veröffentlichungstag und Bekanntmachung des Hinweises auf die Patenterteilung: **14.11.2018**
(21) Anmeldenummer: 05776309.6
(22) Anmeldetag: 02.08.2005
(51) Int. Cl.: G06F 21/60

(54) **VERFAHREN UND SICHERHEITSSYSTEM ZUR SICHEREN UND EINDEUTIGEN KODIERUNG EINES SICHERHEITSMODULS**
METHOD AND SECURITY SYSTEM FOR THE SECURE AND UNAMBIGUOUS CODING OF A SECURITY MODULE
PROCÉDÉ ET SYSTÈME DE SECURITÉ POUR LE CODAGE SUR ET UNIVOQUE D'UN MODULE DE SECURITÉ

(30) Priorität: 26.08.2004 DE 102004041603
(43) Veröffentlichungstag der Anmeldung: 16.05.2007
(73) Patentinhaber: Deutsche Telekom AG, 53113 Bonn (DE)
(72) Erfinder: MOOS, Rainer, 57080 Siegen (DE); SCHMIDT, Klaus, Dieter, 35716 Dietzhölztal (DE); BREUER, Jörg, 57223 Kreuztal (DE)
(74) Vertreter: Blumbach · Zinngrebe Patent- und Rechtsanwälte
(86) Internationale Anmeldenummer: PCT/DE2005/001358
(87) Internationale Veröffentlichungsnummer: WO 2006/021178

(56) Entgegenhaltungen:
- EP-A- 1 322 086
- US-A- 5 745 571
- US-A- 5 805 204
- US-A1- 2003 126 450

## Beschreibung

Die Erfindung betrifft ein Verfahren sowie ein Sicherheitssystem zur sicheren und eindeutigen Kodierung eines Sicherheitsmoduls, insbesondere einer Chipkarte.

Im Bereich der Informationssicherheit haben sich Sicherheitsmodule, zum Beispiel in Form von Chipkarten oder in Form von PC-Einsteckkarten etabliert. Solche Sicherheitsmodule enthalten einen gesicherten Bereich, in dem ein elektronisches Geheimnis, in der Regel ein kryptografischer Schlüssel sicher aufbewahrt werden kann. In dem gesicherten Bereich des Sicherheitsmoduls laufen ferner kryptografische Rechenprozesse ab, so dass der geheim zu haltende kryptografische Schlüssel dden Sicherheitsmodul niemals verlassen muss.

Bei der Kodierung und Personalisierung von Sicherheitsmodulen im Bereich der Informationssicherheit muss sichergestellt werden, dass ein Sicherheitsmodul einmalig ist und dessen sicherheitsrelevante Informationen nicht kopiert werden können. Die Qualität und das Sicherheitsniveau derartiger Sicherheitsmodule wird vom Hersteller mit Hilfe von Sicherheitsevaluierungen durch Dritte nach vorgegebenen Richtlinien nachgewiesen. Die "Information Technology Security Evaluation Criteria (ITSEC)" oder die "Common Criteria for IT Security Evaluation" stellen standardisierte Richtlinien zur Verfügung.

Auch Anwendungen, die solche Sicherheitsmodule zum Beispiel für die elektronische Signatur nutzen, fordern ebenfalls Sicherheitsevaluierungen und die Einmaligkeit von Sicherheitsmodulen.

Damit Sicherheitsmodule für sicherheitsbezogene Anwendungen, wie zum Beispiel das Abwickeln elektronischer Banküberweisungen an einem PC, benutzt werden können, muss sichergestellt werden, dass die geheime Information gesichert in die Sicherheitsmodule eingegeben werden kann. Diesen Vorgang nennt man auch "Kodieren der Sicherheitsmodule".

Üblicherweise werden hierzu die Sicherheitsmodule vom Hersteller in evaluierter Form bereitgestellt. Die Kodierung und Personalisierung eines Sicherheitsmoduls, das heißt die Sicherstellung der Einmaligkeit eines Sicherheitsmoduls, müssen in einer gesicherten Umgebung erfolgen. Die zur Kodierung eines Sicherheitsmoduls erforderliche geheime Information, wie zum Beispiel ein kryptografischer Schlüssel, wird in einem eigenständigen Schlüsselgenerator erzeugt, dessen Qualitäts- und Sicherheitsniveau ebenfalls evaluiert werden muss.

Beim Einbringen, das heißt beim Kodieren der geheimen Information in den Sicherheitsmodul besteht die Gefahr, dass die Information während der Kommunikation mitgelesen und anschließend zur Vervielfachung eines Sicherheitsmoduls genutzt wird.
Der Schutz gegen das Kopieren wird nach dem Stand der Technik mittels organisatorischer Richtlinien und dem Einsatz evaluierbarer Systeme in besonders gesicherten Einsatzumgebungen, wie beispielsweise einem Trust-Center oder anderen vertrauenswürdigen Instanzen realisiert. Das Gesamtsystem, welches zur Personalisierung und Kodierung von Sicherheitsmodulen und zur Erzeugung der für die Kodierung erforderliche geheimen Information dient, muss ebenfalls entsprechend evaluiert werden. Der Einsatz der herkömmlichen Systeme verlangt somit eine besonders gesicherte Umgebung, die eine räumliche Trennung der Prozesse zur Personalisierung, Kodierung und Erzeugung von geheimen Informationen zur Sicherstellung der Einmaligkeit eines Sicheheitsmoduls verhindert.

Patentanmeldung EP 1 322 086 A2 beschreibt ein Verfahren zur Zuordnung geheimer Benutzerschlüssel zu einem beispielsweise als Smartcard ausgebildeten Token. Um eine Übertragung der geheimen Benutzerschlüssel zum Token sicher zu gestalten, sieht das Verfahren vor, einen Tokenspezifischen, privaten Schlüssel in dem Token zu speichern, welcher Bestandteil eines Schlüsselpaares zur asymmetrischen Verschlüsselung von Daten ist. Der geheime Benutzerschlüssel wird vor der Übertragung zu dem Token mit dem entsprechenden Token-spezifischen öffentlichen Schlüssel verschlüsselt, so dass dieser sicher zum Token übertragen und dort mit Hilfe des gespeicherten Token-spezifischen privaten Schlüssel entschlüsselt werden kann.

Der vorliegenden Erfindung liegt die Aufgabe zugrunde, ein Verfahren sowie ein Sicherheitssystem zur sicheren und eindeutigen Kodierung eines Sicherheitsmoduls bereitzustellen, die die Sicherstellung der Einmaligkeit von Sicherheitsmodulen nicht durch den Einsatz einer zentralen vertrauenswürdigen Instanz, sondern durch dezentrale Einrichtungen ermöglichen.
Ein Kerngedanke der Erfindung ist darin zu sehen, Informationen, welche ein elektronisches Geheimnis, wie zum Beispiel kryptografische Schlüssel, enthalten, derart zu erzeugen, dass die erzeugten Informationen nur in einem einzigen Sicherheitsmodul nutzbar sind, ohne dass das Sicherheitsmodul während des Herstellungsprozesses mit einer Kodiereinrichtung verbunden sein muss. Auf diese Weise ist es möglich, die Prozesse zur Herstellung, Personalisierung sowie Kodierung eines Sicherheitsmoduls zeitlich und räumlich zu trennen.

Das oben genannte technische Problem wird zum einen durch ein Verfahren gemäß Anspruch 1 gelöst.

Danach wird ein Verfahren zur sicheren und eindeutigen Kodierung eines Sicherheitsmoduls, insbesondere einer Chipkarte zur Verfügung gestellt. Gemäß dem Verfahren wird in einer sicheren Umgebung ein geheimer erster Kommunikationsschlüssel sowie ein einmaliger Identifizierer in wenigstens einem Sicherheitsmodul abgelegt. "Einmaliger Identifizierer" bedeutet im Rahmen der Erfindung, dass jedem zu kodierenden Sicherheitsmodul in eindeutiger Weise jeweils ein nur einmalig vorhandener Identifizierer zugeordnet wird. Der einmalige Identifizierer des wenigstens einen Sicherheitsmoduls sowie ein zweiter Kommunikationsschlüssel, der in einer vorbestimmten Beziehung zu dem in dem Sicherheitsmodul gespeicherten geheimen ersten Kommunikationsschlüssel steht, werden in einer ersten gesicherten Einrichtung gespeichert.

Bereits an dieser Stelle sei erwähnt, dass der erste und zweite Kommunikationsschlüssel identisch sein können, um ein symmetrisches kryptografisches Verfahren zu ermöglichen. Andererseits kann der zweite Kommunikationsschlüssel auch der öffentliche Schlüssel des Herstellers von Sicherheitsmodulen und der erste Kommunikationsschlüssel der private Schlüssel des Herstellers sein, um ein asymmetrisches kryptografisches Verfahren zu ermöglichen.

An dieser Stelle sei weiterhin angemerkt, dass unter gesicherter Einrichtung eine sichere Umgebung (Raum) verstanden werden kann, in der nicht gesicherte Komponenten aufgestellt sein können. Alternativ kann es sich bei einer gesicherten Einrichtung auch um eine gesicherte, evaluierbare Einrichtung handeln.

In der ersten gesicherten Einrichtung wird eine für den Sicherheitsmodul bestimmte Information erzeugt. Diese Information wird unter Verwendung des zweiten Kommunikationsschlüssels und des einmaligen Identifizierers des Sicherheitsmoduls verschlüsselt und in einer Speichereinrichtung abgelegt. Vorzugsweise nach der Identifizierung des Sicherheitsmoduls wird die verschlüsselte Information aus der Speichereinrichtung ausgelesen und zum Sicherheitsmodul übertragen. Unter Verwendung des geheimen ersten Kommunikationsschlüssels und des einmaligen Identifizierers wird die verschlüsselte Information im Sicherheitssystem entschlüsselt und darin gespeichert. Vorzugsweise ist in dem Sicherheitsmodul ein vorbestimmter gesicherter Bereich implementiert, in dem die Information, die vorzugsweise einen geheimen kryptografischen Schlüssel enthält, abgelegt werden kann.

Die Identifizierung des Sicherheitsmoduls gegenüber der Speichereinrichtung, welche die verschlüsselte Information enthält, kann dadurch erfolgen, dass zunächst sowohl die verschlüsselte Information als auch der einmalige Identifizierer des Sicherheitsmoduls in der Speichereinrichtung abgelegt werden, wobei der einmalige Identifizierer als Adresse zum Auffinden der verschlüsselten Information in der Speichereinrichtung dient. Weiterhin wird eine Kommunikationssverbindung zwischen dem Sicherheitsmodul und der ersten oder einer zweiten gesicherten Einrichtung hergestellt. Der einmalige Identifizierer wird, vorzugsweise nach einer Aufforderung, vom Sicherheitsmodul über die Kommunikationsverbindung zur ersten oder zweiten gesicherten Einrichtung übertragen. Unter Ansprechen auf den empfangenen Identifizierer wird die dazugehörende verschlüsselte Information aus der Speichereinrichtung ausgelesen und zum Sicherheitsmodul übertragen.

Vorzugsweise wird der einmalige Identifizierer und der geheime erste Kommunikationsschlüssel während der Herstellung des Sicherheitsmoduls in einem im Sicherheitsmodul implementierten Speicher abgelegt.

Damit das Sicherheitsmodul selbst überprüfen kann, ob die empfangene verschlüsselte Information für ihn bestimmt ist, werden in der ersten gesicherten Einrichtung nicht nur die für den Sicherheitsmodul bestimmte Information, sonder auch der einmalige Identifizierer des Sicherheitsmoduls unter Verwendung des zweiten Kommunikationsschlüssels und des einmaligen Identifizierers verschlüsselt. In dem Sicherheitsmodul werden die empfangene verschlüsselte Information und der verschlüsselte Identifizierer dann entschlüsselt. Der entschlüsselte Identifizierer wird mit dem im Sicherheitsmodul abgelegten einmaligen Identifizierer verglichen, wobei die entschlüsselte Information bei Übereinstimmung der beiden Identifizierer im Sicherheitsmodul gespeichert wird.

Die für das Sicherheitsmodul bestimmten Informationen können mittels eines symmetrischen Verschlüsselungsverfahrens oder mit Hilfe eines asymmetrischen Verschlüsselungsverfahrens verbeziehungsweise entschlüsselt werden. Beim symmetrischen Verfahren stimmen erster und zweiter Kommunikationsschlüssel überein. Bein asymmetrischen Verschlüsselungsverfahren kann der zweite Kommunikationsschlüssel der öffentliche Schlüssel des Herstellers des Sicherheitsmoduls sein.

Das oben genannte technische Problem wird ebenfalls durch ein Sicherheitssystem nach Anspruch 7 gelöst. Danach weist das Sicherheitssystem eine Einrichtung zum Erzeugen wenigstens eines geheimen ersten Kommunikationsschlüssels und wenigstens eines einmaligen Identifizierers auf. Eine Einrichtung zum Einschreiben eines geheimen ersten Kommunikationsschlüssels und eines einmaligen Identifizierers in ein vorbestimmtes Sicherheitsmodul ist ebenfalls vorgesehen. Weiterhin ist eine erste gesicherte Einrichtung vorgesehen, die eine Speichereinrichtung zum Speichern des einmaligen Identifizierers des wenigstens einen Sicherheitsmoduls und wenigstens eines zweiten Kommunikationsschlüssels, der in einer vorbestimmten Beziehung zu dem in dem Sicherheitsmodul gespeicherten geheimen ersten Kommunikationsschlüssel steht, einen Informationsgenerator zur Erzeugung einer für das wenigstens eine Sicherheitsmodul bestimmten Information und eine Verschlüsselungseinrichtung aufweist, welche zum Verschlüsseln der Information unter Verwendung des zweiten Kommunikationsschlüssels und des einmaligen Identifizierers des wenigstens einen Sicherheitsmoduls ausgebildet ist. Eine Speichereinrichtung dient zum Speichern der verschlüsselten Information und des dazu gehörenden einmaligen Identifizierers. Mit dem Sicherheitsmodul ist eine Kodiereinrichtung verbindbar, die zum Anfordern des Identifizierers des Sicherheitsmoduls, zum Auslesen der zum Identifizierer gehörenden verschlüsselten Information aus der Speichereinrichtung und zur Steuerung der Übertragung der verschlüsselten Information zum Sicherheitsmodul ausgebildet ist. Das Sicherheitsmodul weist eine Einrichtung zum Entschlüsseln der verschlüsselten Information unter Verwendung des geheimen ersten Kommunikationsschlüssels und des einmaligen Identifizierers sowie einen Speicher zum Speichern der entschlüsselten Information auf.

Gemäß einer vorteilhaften Ausbildungsform sind die Speichereinrichtung und die Kodiereinrichtung in der ersten gesicherten Einrichtung implementiert.

Gemäß einer alternativen Ausführungsform ist die Kodiereinrichtung in einer zweiten gesicherten Einrichtung implementiert. In diesem Fall ist die Speichereinrichtung als mobiler Datenträger ausgebildet, der in der ersten und zweiten Sicherheitseinrichtung einsetzbar ist.

Um dem Sicherheitsmodul zu ermöglichen, selbst zu prüfen, ob eine empfangene verschlüsselte Information für ihn bestimmt ist, ist die Verschlüsselungseinrichtung ferner zum Verschlüsseln des einmaligen Identifizierers des wenigstens einen Sicherheitsmoduls ausgebildet. Ferner ist die Entschlüsselungseinrichtung zum Entschlüsseln des verschlüsselten Identifizierers ausgebildet. Eine Vergleichseinrichtung dient dazu, den entschlüsselten Identifizierer mit dem individuellen Schlüssel des Sicherheitsmoduls zu vergleichen. Die entschlüsselte Information wird dann im Speicher gespeichert, wenn die beiden verglichenen Identifizierer übereinstimmen.

Die Erfindung wird nachstehend anhand eines Ausführungsbeispiels in Verbindung mit den beiliegenden Zeichnungen näher erläutert. Es zeigen:
- Fig. 1: ein schematisches Blockschaltbild einer ersten gesicherten Einrichtung und
- Fig. 2: ein Sicherheitsmodul, welches mit einer zweiten gesicherten Einrichtung verbunden ist.

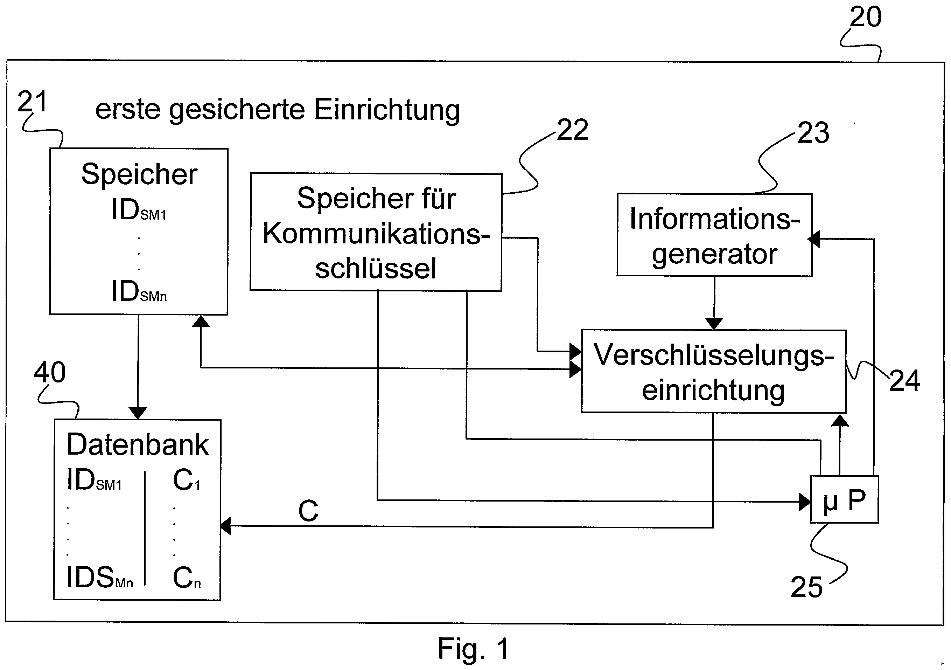

Fig. 1 zeigt eine erste gesicherte Einrichtung 10, deren Hauptaufgabe darin besteht, geheimzuhaltende Informationen für gezielt ausgewählte Sicherheitsmodule zu erzeugen. Hierzu weist die erste gesicherte Einrichtung 10 einen Speicher 21 auf, in dem einmalige Identifizierer ID_{SM1} bis ID_{SMn}, die, wie noch beschrieben wird, jeweils den zu kodierenden Sicherheitsmodulen zugeordnet sind, gespeichert sind. In einem zweiten Speicher 22 ist wenigstens ein Kommunikationsschlüssel abgelegt. Die erste gesicherte Einrichtung 20 weist ferner einen Informationsgenerator 23 auf, der eine geheimzuhaltende Information, vorzugsweise einen geheimen kryptografischen Schlüssel erzeugen kann, der zur Kodierung eines ganz bestimmten Sicherheitsmoduls bverwendet wird. Der Informationsgenerator 23 übergibt eine erzeugte Information einer Verschlüsselungseinrichtung 24. Die Verschlüsselungseinrichtung 24 greift auf die Speicher 21 und 22 zu, um die vom Informationsgenerator 23 empfangene Information mit dem im Speicher 22 abgelegten Kommunikationsschlüssel und einem, einem Sicherheitsmodul eindeutig zugewiesenen Identifizierer zu verschlüsseln. Neben der vom Informationsgenerator 23 erzeugten Information kann die Verschlüsselungseinrichtung 24 ebenfalls einen einmaligen Identifizierer, der im Speicher 21 abgelegt ist, verschlüsseln. Die von der Verschlüsselungseinrichtung 24 ausgegebene verschlüsselte Information c wird dann mit dem dazugehörenden Identifizierer in einer Datenbank 40 abgelegt. Der zu einer verschlüsselten Information hinterlegte Identifizierer dient als Adresse, unter der die verschlüsselte Information in der Datenbank 40 aufgefunden werden kann. Die Überwachung und Steuerung der ersten gesicherten Einrichtung 20 übernimmt ein Mikroprozessor 25. Das den Mikroprozessor 25 steuernde Programm ist in einem nicht dargestellten Speicher abgelegt.

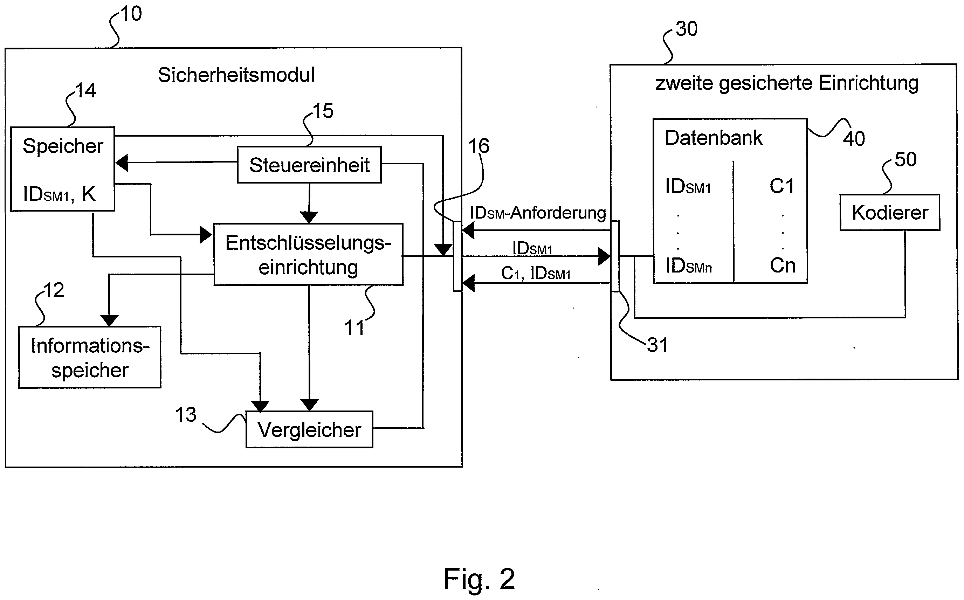

Fig. 2 zeigt ein zu kodierendes Sicherheitsmodul 10, welches bereits mit einer zweiten gesicherten Einrichtung 30 verbunden ist.

Fig. 2 zeigt weiterhin, dass die in Fig. 1 dargestellte Datenbank 40 nunmehr der zweiten gesicherten Einrichtung 30 eingesetzt worden ist. Im geschilderten Beispiel ist die Datenbank 40 als mobiler Datenträger ausgebildet, der sowohl in der ersten gesicherten Einrichtung 20 als auch in der zweiten gesicherten Einrichtung 30 eingesetzt werden kann. Ferner ist ein Kodierer 50 in der zweiten gesicherten Einrichtung 30 implementiert, der dazu dient, die zur sicheren Kodierung des Sicherheitsmoduls 10 notwendige geheime Information _{c1} aus der Datenbank 40 auszulesen und zum Sicherheitsmodul 10 zu übertragen. Die zweite gesicherte Einrichtung 30 weist zudem eine Kommunikationsschnittstelle 31 auf, über die sie mit dem Sicherheitsmodul 10 kommunizieren kann. Hierzu enthält das Sicherheitsmodul 10 eine Schnittstelle 16

Das Sicherheitsmodul 10 weist ferner einen Speicher 14 auf, in den der Hersteller während der Herstellung des Sicherheitsmoduls 10 einen einmaligen, das heißt ausschließlich dem Sicherheitsmodul 10 zugeordneten Identifizierer ID_{SM1} und einen geheimen Kommunikationsschlüssel speichert. Ferner weist das Sicherheitsmodul 10 eine Entschlüsselungseinrichtung 11 auf, die eine von der zweiten gesicherten Einrichtung 30 kommende verschlüsselte Information mit Hilfe des einmaligen Identifizierers ID_{SM1} und des geheimen Kommunikationsschlüssels entschlüsseln kann. Die Entschlüsselungseinrichtung 11 ist mit einem Informationsspeicher 12 verbunden, in dem die entschlüsselte Information in gesicherter Weise abgelegt werden kann. Der Speicher 14 und die Entschlüsselungseinrichtung 11 sind mit einem Vergleicher 13 verbunden, der einen von der zweiten gesicherten Einrichtung 30 empfangenen verschlüsselten Identifizierer mit dem im Speicher 14 hinterlegten einmaligen Identifizierer ID_{SM1} vergleichen kann. Eine Steuereinheit 15 dient unter anderem dazu, die Entschlüsselungseinrichtung 11 zu veranlassen, die entschlüsselte Information in dem Informationsspeicher 12 abzulegen, sofern der Vergleicher 13 eine Übereinstimmung der Identifizierer festgestellt hat.

An dieser Stelle sei erwähnt, dass der Kodierer 50 auch in der ersten gesicherten Einrichtung 20 implementiert sein kann. In diesem Fall weist die erste gesicherte Einrichtung 20 eine Kommunikationsschnittstelle auf, über die sie mit dem Sicherheitsmodul 10 kommunizieren kann. Eine räumliche Trennung der ersten gesicherten Einrichtung 10, die die für das Sicherheitsmodul bestimmte Information mittels des Informationsgenerators 23 erzeugt, und der zweiten gesicherten Einrichtung 30, die die Kodierung des Sicherheitsmoduls 10 durchführt, ist in diesem Fall, im Unterschied zu den in den Figuren 1 und 2 gezeigten Ausführungsbeispiel, nicht erforderlich.

Nachfolgend wird die Funktionsweise des in den Figuren 1 und 2 dargestellten Sicherheitssystems, welches den Sicherheitsmodul 10 sowie die erste gesicherte Einrichtung 20 und die zweite gesicherte Einrichtung 30 umfasst, näher erläutert.

Damit es möglich ist, die Personalisierung eines Sicherheitsmoduls, die Erzeugung einer geheimen Information sowie die Kodierung eines Sicherheitsmoduls zeitlich und räumlich zu trennen, sind folgende Voraussetzungen zu treffen:
Das zu kodierende Sicherheitsmodul 10 muss in der Lage sein, kryptografische Prozesse zu rechnen und einen dazu erforderlichen kryptografischen Schlüssel sicher zum Beispiel im Speicher 14 aufzubewahren.
Der zu kodierende Sicherheitsmodul 10 liefert auf Anfrage eine eindeutige verwertbare Information, das heißt einen einmaligen Identifizierer, der zum Beispiel während der Herstellung des Sicherheitsmoduls 10 im Speicher 14 abgelegt wird.
Die in der ersten gesicherten Einrichtung 20 implementierte Verschlüsselungseinirchtung 24 kann die gleichen kryptografischen Prozesse rechnen, die auch der zu kodierende Sicherheitsmodul 10 verwendet.
Die Hersteller von Sicherheitsmodulen liefern eine exakte Auflistung der einmaligen Identifizierer derjenigen Sicherheitsmodule, die kodiert werden sollen.
Der Prozess, in dem eine Information erzeugt wird und die Art der Speicherung der Information in einem ausgewählten Sicherheitsmodul befinden sich innerhalb eines evaluierbaren Bereichs.

Es sei nunmehr angenommen, dass ein Modulhersteller während der Herstellung des Sicherheitsmoduls 10 dafür sorgt, dass der einmalige Identifizierer ID_{SM1} und ein geheimer Kommunikationsschlüssel in dem Speicher 14 abgelegt werden. Dieser Prozess betrifft die Personalisierung des Sicherheitsmoduls 10. Auf diese Weise können selbstverständlich mehrere Sicherheitsmodule, auch von verschiedenen Herstellern, personalisiert werden. Der Hersteller des Sicherheitsmoduls 10 sorgt ferner dafür, dass der einmalige Identifizierer ID_{SM1} des Sicherheitsmoduls 10 auf sicherem Wege zur ersten gesicherten Einrichtung 20 gelangt und dort in dem Speicher 21 abgelegt wird. Auf diesem Wege können die einmaligen Identifizierer aller zu kodierenden Sicherheitsmodule zur ersten gesicherten Einrichtung 20 gelangen und im Speicher 21 abgelegt werden. In dem Speicher 22 ist ein Kommunikationsschlüssel hinterlegt, der zu dem im Sicherheitsmodul 10 gespeicherten Kommunikationsschlüssel gehört. Im vorliegenden Fall sei angenommen, dass beide Kommunikationsschlüssel identisch sind und somit ein symmetrisches kryptografisches Verfahren ermöglichen. Denkbar ist auch, dass der im Speicher 22 abgelegte Kommunikationsschlüssel der öffentliche Schlüssel des Herstellers und der im Speicher 14 des Sicherheitsmoduls 10 gespeicherte Kommunikationsschlüssel der private Schlüssel des Herstellers ist. In diesem Fall würden die gewählten Kommunikationsschlüssel ein asymmetrisches kryptografisches Verfahren, das sogenannte Public-Key-Verfahren unterstützen. Sollen mehrere Sicherheitsmodule von ein und demselben oder von verschiedenen Herstellern kodiert werden, sind bei Anwendung eines symmetrischen Schlüsselverfahrens die in den Sicherheitsmodulen gespeicherten Kommunikationsschlüssel im Speicher 22 zu speichern, während bei Anwendung des Public-Key-Verfahrens die öffentlichen Schlüssel der jeweiligen Hersteller im Speicher 22 abgelegt werden müssen.

Es sei nunmehr angenommen, dass der Modulhersteller wenigstens das Sicherheitsmodul 10 dem Betreiber der zweiten gesicherten Einrichtung 30 übergibt, damit das Sicherheitsmodul 10 kodiert werden kann.
Der Informationsgenerator 23 erzeugt nunmehr eine geheimzuhaltende Information, die später gesichert in den Sicherheitsmodul 10 eingebracht, d. h. kodiert werden soll. Die geheimzuhaltende Information wird dann vom Informationsgenerator 23 der Verschlüsselungseinrichtung 24 übergeben. Die Verschlüsselungseinrichtung 24 liest aus dem Speicher 21 den einmaligen Identifizierer ID_{SM1} des zu kodierenden Sicherheitsmoduls 10 und aus dem Speicher 22 den Kommunikationsschlüssel aus und verschlüsselt die geheimzuhaltende Information sowohl mit dem einmaligen Identifizierer ID_{SM1} als auch dem Kommunikationsschlüssel. Vorzugsweise wird auch der aus dem Speicher 21 ausgelesene Identifizierer ID_{SM1} in entsprechender Weise verschlüsselt. Die zur Kodierung des Sicherheitsmoduls 10 verschlüsselte Information C₁, der verschlüsselte Identifizierer ID_{SM1} und der nicht verschlüsselte Identifizierer ID_{SM1} werden in die Datenbank 40 geschrieben. Der in der Datenbank 40 abgelegte Identifizierer ID_{SM1} dient als Adresse, unter der die dazu abgelegt verschlüsselte Information C₁ in der Datenbank 40 aufgefunden werden kann.

Wie in den Figuren 1 und 2 dargestellt, sind die erste gesicherte Einrichtung 20 und die zweite gesicherte Einrichtung 30 als räumlich getrennte Einrichtungen ausgebildet. Demzufolge muss die Datenbank 40 aus der ersten gesicherten Einrichtung 20 herausgenommen und auf gesichertem Wege zur zweiten gesicherten Einrichtung 30 gebracht und dort eingesetzt werden. Bevor das Sicherheitsmodul 10 kodiert werden kann, muss eine Kommunikationsverbindung zwischen dem Sicherheitsmodul 10 und der zweiten gesicherten Einrichtung 30 hergestellt werden, wie in Fig. 2 gezeigt. Hierzu kann das Sicherheitsmodul 10 vollständig in die zweite gesicherte Einrichtung 30 eingesetzt werden. Alternativ ist es denkbar, dass das Sicherheitsmodul 10 und die zweite gesicherte Einrichtung 30, wie dargestellt, als separate Einrichtungen aufgebaut sind, die dann innerhalb eines gesicherten Bereichs untergebracht werden müssen. Eine besondere Kommunikationssoftware, die sowohl im Sicherheitsmodul 10 als auch in der zweiten gesicherten Einrichtung 30 abgelegt ist, veranlasst zunächst die zweite gesichert Einrichtung 30, vorzugsweise den Kodierer 50, ein ID_{SM}-Anforderungssignal zur Steuereinheit 15 des Sicherheitsmoduls 10 zu übertragen. Daraufhin wird die Steuereinheit 15 derart gesteuert, dass sie den Identifizierer ID_{SM1} aus dem Speicher 14 ausliest und zum Kodierer 50 übertragt. Der Kodierer 50 wird nunmehr derart angesteuert, dass er den empfangenen Identifizierer ID_{SM1} als Adresssignal an die Datenbank 40 anlegt und die unter dieser Adresse abgelegte verschlüsselte Information C₁ und den verschlüsselten Identifizierer ID_{SM1} ausliest und zum Sicherheitsmodul 10 überträgt. Der beschriebene Datenaustausch zwischen dem Sicherheitsmodul 10 und der zweiten gesicherten Einrichtung 30 ist schematisch durch die drei zwischen den Schnittstellen 16 und 31 eingezeichneten Kommunikationspfaden dargestellt.

Die Steuereinheit 15 sorgt nunmehr dafür, dass der verschlüsselte Identifizierer ID_{SM1} mit Hilfe des geheimen Kommunikationsschlüssels und des Identifizierers ID_{SM1}, welche im Speicher 14 abgelegt sind, in der Entschlüsselungseinrichtung 11 entschlüsselt werden.
Die Steuereinheit 15 steuert anschließend den Vergleicher 13 derart an, dass der im Speicher 14 gespeicherte einmalige Identifizierer ID_{SM1} mit dem entschlüsselten Identifizierer verglichen wird. Stimmen beide Identifizierer überein, so veranlasst die Steuereinheit 15 die Entschlüsselungseinrichtung 11, sofern dies noch nicht geschehen ist, die verschlüsselte, geheimzuhaltende Information C₁ zu entschlüsseln und im Informationsspeicher 12 abzulegen.

Dank des beschriebenen Sicherheitssystems kann ein Sicherheitsmodul derart kodiert werden, dass dessen Einmaligkeit sichergestellt werden kann, ohne dass die Prozesse der Personalisierung eines Sicherheitsmoduls, der Informationserzeugung im Informationsgenerator 23 und der Kodierung des Sicherheitsmoduls mittels des Kodierers 50 in einer gemeinsamen, besonders gesicherten Umgebung ausgeführt werden müssen. Vielmehr können, wie Figuren 1 und 2 zeigen, sogar der Informationsgenerator 23 und der Kodierer 50 räumlich getrennt in verschiedenen gesicherten Umgebungen betrieben werden.

Ein wesentlicher Gesichtspunkt der Erfindung ist demzufolge darin zu sehen, dass der Sicherheitsmodul 10 während des Herstellungsprozesses in einer gesicherten Umgebung personalisiert wird, indem der Hersteller einen einmaligen, das heißt einmalig erzeugten Identifizierer im Speicher 14 des Sicherheitsmoduls ablegt. Die gesicherte Kodierung zur Gewährleistung der Einmaligkeit des Sicherheitsmoduls 10 wird dadurch erreicht, dass die für den Sicherheitsmodul 10 bestimmte geheimzuhaltende Information nicht nur mit einem Kommunikationsschlüssel, sondern mit dem einmaligen Identifizierer ID_{SM1} des Sicherheitsmoduls 10 verschlüsselt wird. Dadurch wird sichergestellt, dass die geheimzuhaltende Information nur von dem Sicherheitsmodul 10 entschlüsselt und für sicherheitsbezogene Anwendungen verwendet werden kann.

## Patentansprüche

1. Verfahren zur sicheren und eindeutigen Kodierung eines Sicherheitsmoduls, insbesondere einer Chipkarte,
mit folgenden Verfahrensschritten:
in einer sicheren Umgebung werden ein geheimer erster Kommunikationsschlüssel sowie ein einmaliger Identifizierer (ID_{SM1}) in einem Sicherheitsmodul (10) abgelegt;
der einmalige Identifizierer (ID_{SM1}) des Sicherheitsmoduls (10) und ein zweiter Kommunikationsschlüssel, der in einer vorbestimmten Beziehung zu dem in dem Sicherheitsmodul (10) gespeicherten geheimen ersten Kommunikationsschlüssel steht, werden in einer ersten gesicherten Einrichtung (20) gespeichert;
in der ersten gesicherten Einrichtung (20) wird eine für den Sicherheitsmodul (10) bestimmte Information erzeugt;
die Information wird unter Verwendung des zweiten Kommunikationsschlüssels und des einmaligen Identifizierers (ID_{SM1}) des Sicherheitsmoduls (10) verschlüsselt und zusammen mit dem einmaligen Identifizierer (ID_{SM1}) des Sicherheitsmoduls in einer Speichereinrichtung (40) abgelegt;
zwischen dem Sicherheitsmodul (10) und der ersten (20) oder einer zweiten gesicherten Einrichtung (30) wird eine Kommunikationsverbindung hergestellt;
der einmalige Identifizierer (ID_{SM1}) wird vom Sicherheitsmodul (10) über die Kommunikationsverbindung zur ersten (20) oder zweiten gesicherten Einrichtung (30) übertragen;
unter Ansprechen auf den empfangenen Identifizierer (ID_{SM1}) wird die dazugehörende verschlüsselte Information aus der Speichereinrichtung (40)ausgelesen und zum Sicherheitsmodul (10) übertragen;
unter Verwendung des geheimen ersten Kommunikationsschlüssels und des einmaligen Identifizierers (ID_{SM1}) wird die verschlüsselte Information im Sicherheitsmodul (10) entschlüsselt und darin gespeichert.

2. Verfahren nach Anspruch 1,
**dadurch gekennzeichnet, dass**
der einmalige Identifizierer (ID_{SM1}) und der geheime erste Kommunikationsschlüssel während der Herstellung des Sicherheitsmodul in diesem abgelegt werden.

3. Verfahren nach einem der Ansprüche 1 oder 2,
**dadurch gekennzeichnet, dass**
in der ersten gesicherten Einrichtung (20) die für den Sicherheitsmodul (10) bestimmte Information und der einmalige Identifizierer (ID_{SM1}) des Sicherheitsmoduls (10) unter Verwendung des zweiten Kommunikationsschlüssels und des einmaligen Identifizierers (ID_{SM1}) verschlüsselt werden, dass in dem Sicherheitsmodul (10) die verschlüsselte Information und der verschlüsselte Identifizierer entschlüsselt werden, dass
der entschlüsselte Identifizierer mit dem im Sicherheitsmodul (10) abgelegten einmaligen Identifizierer verglichen wird, und dass die entschlüsselte Information bei Übereinstimmung der beiden Identifizierer im Sicherheitsmodul gespeichert wird.

4. Verfahren nach einem der Ansprüche 1 bis 3,
**dadurch gekennzeichnet, dass**
die Information einen kryptografischen Schlüssel enthält und in einem gesicherten Bereich des Sicherheitsmoduls abgelegt wird.

5. Verfahren nach einem der Ansprüche 1 bis 4,
**dadurch gekennzeichnet, dass**
der zweite Kommunikationsschlüssel dem ersten geheimen Kommunikationsschlüssel entspricht oder den öffentlichen Schlüssel des Herstellers des Sicherheitsmoduls darstellt.

6. Sicherheitssystem zur sicheren und eindeutigen Kodierung wenigstens eines Sicherheitsmoduls (10), insbesondere einer Chipkarte, geeignet für die Durchführung eines Verfahrens nach Anspruch 1, mit einer Einrichtung zum Erzeugen wenigstens eines geheimen ersten Kommunikationsschlüssels und wenigstens eines einmaligen Identifizierers (ID_{SM1}),
einer Einrichtung zum Einschreiben eines geheimen ersten Kommunikationsschlüssels und eines einmaligen Identifizierers in ein vorbestimmtes Sicherheitsmodul (10),
einer ersten gesicherten Einrichtung (20), die eine Speichereinrichtung (21, 22) zum Speichern des einmaligen Identifizierers (ID_{SM1}) des wenigstens einen Sicherheitsmoduls und wenigstens eines zweiten Kommunikationsschlüssels, der in einer vorbestimmten Beziehung zu dem im Sicherheitsmodul (10) gespeicherten geheimen ersten Kommunikationsschlüssel steht, einen Informationsgenerator (23) zur Erzeugung einer für das wenigstens eine Sicherheitsmodul (10) bestimmten Information und eine Verschlüsselungseinrichtung (24) aufweist, welche zum Verschlüsseln der Information unter Verwendung des zweiten Kommunikationsschlüssels und des einmaligen Identifizierers (ID_{SM1}) des wenigstens einen Sicherheitsmodul (10) ausgebildet ist,
einer Speichereinrichtung (40) zum Speichern der verschlüsselten Information und des dazugehörenden einmaligen Identifizierers (ID_{SM1}),
einer mit dem Sicherheitsmodul (10) verbindbare Kodiereinrichtung (50), die zum Anfordern des einmaligen Identifizierers (ID_{SM1}) des Sicherheitsmoduls (10), zum Auslesen der zu dem einmaligen Identifizierer (ID_{SM1}) gehörenden verschlüsselten Information aus der Speichereinrichtung (40) und zur Steuerung der Übertragung der verschlüsselten Information zum Sicherheitsmodul (10) ausgebildet ist,
wobei das Sicherheitsmodul (10) eine Einrichtung (11) zum Entschlüsseln der verschlüsselten Information unter Verwendung des geheimen ersten Kommunikationsschlüssels und des einmaligen Identifizierers (ID_{SM1}) sowie einen Speicher (12) zum Speichern der entschlüsselten Information aufweist.

7. Sicherheitssystem nach Anspruch 6,
**dadurch gekennzeichnet, dass**
die Speichereinrichtung (40) und die Kodiereinrichtung (50) in der erste gesicherten Einrichtung (20) implementiert sind.

8. Sicherheitssystem nach Anspruch 6,
**dadurch gekennzeichnet, dass**
die Kodiereinrichtung (50) in einer zweiten gesicherten Einrichtung (30) implementiert ist, und dass die Speichereinrichtung (40) ein mobiler Datenträger ist, der in der ersten (20) und zweiten Sicherheitseinrichtung (30) einsetzbar ist.

9. Sicherheitssystem nach einem der Ansprüche 6 bis 8,
**dadurch gekennzeichnet, dass**
die Verschlüsselungseinrichtung (24) ferner zum Verschlüsseln des einmaligen Identifizierers (ID_{SM1}) des Sicherheitsmodul (10)ausgebildet ist, dass die Entschlüsselungseinrichtung (11) ferner zum Entschlüsseln des verschlüsselten Identifizierers ausgebildet ist, und dass
eine Vergleichseinrichtung (13) zum Vergleichen des entschlüsselten Identifizierers mit dem einmaligen Identifizierer (ID_{SM1}) des Sicherheitsmodul vorgesehen ist, wobei die entschlüsselte Information im Speicher (12) gespeichert wird, wenn die beiden verglichenen Identifizierer übereinstimmen.

## Claims

1. A method for secure and unambiguous encoding of a security module, in particular a chip card, comprising the following method steps:
a secret first communication key and a unique identifier (ID_{SM1}) are stored in a security module (10) in a secure environment;
the unique identifier (ID_{SM1}) of the security module (10) and a second communication key that is related in a specific way to the secret first communication key stored in the security module (10) are stored in a first secure device (20);
an information intended for the security module (10) is generated in the first secure device (20);
the information is encrypted using the second communication key and the unique identifier (ID_{SM1}) of the security module (10), and is stored in a storage device (40) together with the unique identifier (ID_{SM1}) of the security module (10);
a communication connection is established between the security module (10) and the first (20) or a second secure device (30);
the unique identifier (ID_{SM1}) is transmitted from the security module (10) to the first (20) or second (30) secure device via the communication connection;
in response to the received identifier (ID_{SM1}), the associated encrypted information is read out from the storage device (40) and is transmitted to the security module (10);
using the secret first communication key and the unique identifier (ID_{SM1}), the encrypted information is decrypted in the security module (10) and stored therein.

2. The method according to claim 1,
**characterised in that**
the unique identifier (ID_{SM1}) and the secret first communication key are stored in the security module during manufacture thereof.

3. The method according to any one of claims 1 or 2,
**characterised in that**
the information intended for the security module (10) and the unique identifier (ID_{SM1}) of the security module (10) are encrypted in the first secure device (20) using the second communication key and the unique identifier (ID_{SM1}); that
the encrypted information and the encrypted identifier are decrypted in the security module (10); that the decrypted identifier is compared with the unique identifier stored in the security module (10); and that if the two identifiers match, the decrypted information is stored in the security module.

4. The method according to any one of claims 1 to 3,
**characterised in that**
the information includes a cryptographic key and is stored in a secure area of the security module.

5. The method according to any one of claims 1 to 4,
**characterised in that**
the second communication key corresponds to the first secret communication key or represents the public key of the manufacturer of the security module.

6. A security system for secure and unambiguous encoding of at least one security module (10), in particular a chip card, suitable for carrying out a method according to claim 1, comprising:
a device for generating at least one secret first communication key and at least one unique identifier (ID_{SM1}) ;
a device for registering a secret first communication key and a unique identifier in a specified security module (10);
a first secure device (20) including a storage device (21, 22) for storing the unique identifier (ID_{SM1}) of the at least one security module and at least one second communication key that is related in a specific way to the secret first communication key stored in the security module (10), an information generator (23) for generating an information intended for the at least one security module (10), and an encryption device (24) which is configured for encrypting the information using the second communication key and the unique identifier (ID_{SM1}) of the at least one security module (10);
a storage device (40) for storing the encrypted information and the associated unique identifier (ID_{SM1}) ;
an encoding device (50) connectable to the security module (10), which is configured for requesting the unique identifier (ID_{SM1}) of the security module (10), for reading out the encrypted information associated with the unique identifier (ID_{SM1}) from the storage device (40), and for controlling the transmission of the encrypted information to the security module (10);
wherein the security module (10) includes a device (11) for decrypting the encrypted information using the secret first communication key and the unique identifier (ID_{SM1}), and a memory (12) for storing the decrypted information.

7. The security system according to claim 6,
**characterised in that**
the storage device (40) and the encoding device (50) are implemented in the first secure device (20).

8. The security system according to claim 6,
**characterised in that**
the encoding device (50) is implemented in a second secure device (30); and that
the storage device (40) is a mobile data medium which can be inserted into the first (20) and second (30) security devices.

9. The security system according to any one of claims 6 to 8, **characterised in that**
the encryption device (24) is furthermore configured for encrypting the unique identifier (ID_{SM1}) of the security module (10); that
the decryption device (11) is furthermore configured for decrypting the encrypted identifier; and that
a comparison device (13) is provided for comparing the decrypted identifier with the unique identifier (ID_{SM1}) of the security module, wherein the decrypted information is stored in the memory (12) if the two compared identifiers match.

## Revendications

1. Procédé de codage sûr et univoque d'un module de sécurité, en particulier d'une carte à puce, avec les étapes de procédé suivantes :
dans un environnement sûr, une première clé de communication secrète ainsi qu'un identificateur (ID_{SM1}) unique sont classés dans un module de sécurité (10) ;
l'identificateur (ID_{SM1}) unique du module de sécurité (10) et une seconde clé de communication, qui se trouve dans une relation prédéterminée avec la première clé de communication secrète stockée dans le module de sécurité (10), sont stockés dans un premier dispositif sécurisé (20) ;
dans le premier dispositif sécurisé (20) est produite une première information déterminée pour le module de sécurité (10) ;
l'information est chiffrée à l'aide de la seconde clé de communication et de l'identificateur (ID_{SM1}) unique du module de sécurité (10) et classée dans un dispositif de stockage (40) ensemble avec l'identificateur (ID_{SM1}) unique du module de sécurité ;
une liaison de communication est produite entre le module de sécurité (10) et le premier (20) ou un second dispositif sécurisé (30) ;
l'identificateur (ID_{SM1}) unique est transmis au premier (20) ou au second dispositif sécurisé (30) depuis le module de sécurité (10) via la liaison de communication ;
réagissant à l'identificateur (IDSM1) reçu, l'information chiffrée lui appartenant est lue depuis le dispositif de stockage (40) et transmise au module de sécurité (10) ;
à l'aide de la première clé de communication secrète et de l'identificateur (ID_{SM1}) unique, l'information chiffrée est déchiffrée dans le module de sécurité (10) et stockée à l'intérieur de celui-ci.

2. Procédé selon la revendication 1, **caractérisé en ce que** l'identificateur (ID_{SM1}) unique et la première clé de communication secrète sont classés dans le module de sécurité pendant la fabrication de celui-ci.

3. Procédé selon l'une quelconque des revendications 1 ou 2, **caractérisé en ce que** :
dans le premier dispositif sécurisé (20), l'information déterminée pour le module de sécurité (10) et l'identificateur (ID_{SM1}) unique du module de sécurité (10) sont chiffrés à l'aide de la seconde clé de communication et de l'identificateur (ID_{SM1}) unique,
**en ce que** l'information chiffrée et l'identificateur chiffré sont déchiffrés dans le module de sécurité (10),
**en ce que** l'identificateur déchiffré est comparé à l'identificateur unique classé dans le module de sécurité (10), et
**en ce que** l'information déchiffrée est stockée dans le module de sécurité en cas de concordance des deux identificateurs.

4. Procédé selon l'une quelconque des revendications 1 à 3, **caractérisé en ce que** l'information contient une clé cryptographique et est classée dans une région sécurisée du module de sécurité.

5. Procédé selon l'une quelconque des revendications 1 à 4, **caractérisé en ce que** la seconde clé de communication correspond à la première clé de communication secrète ou constitue la clé publique du fabricant du module de sécurité.

6. Système de sécurité pour un codage sûr et univoque d'au moins un module de sécurité (10), en particulier d'une carte à puce, adapté pour la réalisation d'un procédé selon la revendication 1, comportant :
un dispositif pour produire au moins une première clé de communication secrète et au moins un identificateur (ID_{SM1}) unique,
un dispositif pour inscrire une première clé de communication secrète et un identificateur unique dans un module de sécurité (10) prédéterminé ;
un premier dispositif sécurisé (20) qui présente un dispositif de stockage (21, 22) pour stocker l'identificateur (ID_{SM1}) unique de l'au moins un module de sécurité et au moins une seconde clé de communication qui se trouve dans une relation prédéterminée avec la première clé de communication secrète stockée dans le module de sécurité (10), un générateur d'information (23) pour produire une information déterminée pour l'au moins un module de sécurité (10) et un dispositif de chiffrage (24), lequel est conçu pour chiffrer l'information à l'aide de la seconde clé de communication et de l'identificateur (ID_{SM1}) unique de l'au moins un module de sécurité (10),
un dispositif de stockage (40) pour stocker l'information chiffrée et l'identificateur (ID_{SM1}) unique lui appartenant,
un dispositif de codage (50) pouvant être relié au module de sécurité (10), qui est conçu pour requérir l'identificateur (ID_{SM1}) unique du module de sécurité (10), pour lire l'information chiffrée appartenant à l'identificateur (ID_{SM1}) unique depuis le dispositif de stockage (40) et pour commander la transmission de l'information chiffrée vers le module de sécurité (10),
dans lequel le module de sécurité (10) présente un dispositif (11) pour déchiffrer l'information chiffrée à l'aide de la première clé de communication secrète et de l'identificateur (ID_{SM1}) unique ainsi qu'un stockage (12) pour stocker l'information déchiffrée.

7. Système de sécurité selon la revendication 6, **caractérisé en ce que** le dispositif de stockage (40) et le dispositif de codage (50) sont mis en oeuvre dans le premier dispositif sécurisé (20).

8. Système de sécurité selon la revendication 6, **caractérisé en ce que** :
le dispositif de codage (50) est mis en oeuvre dans un second dispositif sécurisé (30), et **en ce que**
le dispositif de stockage (40) est un support de données mobile qui peut être inséré dans le premier (20) et le second dispositif de sécurité (30).

9. Système de sécurité selon l'une quelconque des revendications 6 à 8, **caractérisé en ce que** :
le dispositif de chiffrage (24) est en outre conçu pour chiffrer l'identificateur (ID_{SM1}) unique du module de sécurité (10),
**en ce que** le dispositif de déchiffrage (11) est en outre conçu pour déchiffrer l'identificateur chiffré, et
**en ce qu'**un dispositif de comparaison (13) est prévu pour comparer l'identificateur déchiffré à l'identificateur (ID_{SM1}) unique du module de sécurité, l'information déchiffrée étant stockée dans le stockage (12) lorsque les deux identificateurs comparés concordent.
